# EUROPÄISCHE PATENTSCHRIFT

(11) **EP 1 055 357 B1**
(45) Veröffentlichungstag und Bekanntmachung des Hinweises auf die Patenterteilung: **02.04.2008**
(21) Anmeldenummer: 00110035.3
(22) Anmeldetag: 12.05.2000
(51) Int. Cl.: A01B 73/00

(54) **Landwirtschaftliches Gerät mit einem zwischen einer Transport- und einer Stauposition verbringbarem Rad**
Agricultural implement with wheel configurable between transport and stowed position
Outil agricole avec roue pouvant être configurée entre une position de transport et une position de stockage

(30) Priorität: 28.05.1999 US 321816
(43) Veröffentlichungstag der Anmeldung: 29.11.2000
(73) Patentinhaber: DEERE & COMPANY, Moline, Illinois 61265-8098 (US)
(72) Erfinder: Yeomans, Sidney Wayne, Milan, IL 61264 (US); Watts, Bradley James, Eldridge, IA 52748 (US); Salley, Gorden Lee, Moline, IL 61265 (US); Brase, Kevin D., St. Bonifacius, MN 55375 (US)
(74) Vertreter: Holst, Sönke

(56) Entgegenhaltungen:
- FR-A- 2 763 782
- US-A- 2 833 105
- US-A- 2 996 307
- US-A- 3 199 889
- US-A- 3 721 461

## Beschreibung

Die Erfindung betrifft ein landwirtschaftliches Gerät mit einem zwischen einer Transport- und einer Stauposition verbringbarem Rad, das in einer Transportposition parallel zur Transportrichtung des Geräts am Gerät fixierbar und drehbar auf einer Achse gelagert und in Bodenkontakt bringbar ist, wobei die Achse des Rads in der Transportposition an einem Schwenkarm befestigbar ist, der sich vom Gerät in einer ersten Richtung erstreckt, und der in eine Stauposition verbringbar ist, in der er sich in eine zweite Richtung erstreckt, und wobei eine mit dem Schwenkarm gekoppelte Strebe den Schwenkarm sowohl in der Transportposition als auch in der Stauposition altert (z.B. US-A-2833105).

Um die Effizienz bei der Ernte zu steigern, wurde die Größe und Kapazität von Erntemaschinen, wie Mähdreschern, in den letzten Jahren vergrößert. Durch diese Kapazitätssteigerung steigerte sich auch die Breite der abnehmbaren Vorsätze zum Aufnehmen des Ernteguts. Ein breiterer Vorsatz steigert die Effizienz durch eine Verminderung der Anzahl der Überquerungen, die eine Erntemaschine über ein Feld durchführen muss, um das ganze Feld abzuarbeiten. Jedoch führte die vergrößerte Breite des Vorsatzes zu Schwierigkeiten beim Transport der Erntemaschine und des Vorsatzes von Feld zu Feld. Mit einem breiten Vorsatz am Mähdrescher kann es schwierig sein, den Mähdrescher auf Straßen zu fahren, und schwierig oder sogar unmöglich, enge Brücken zu überqueren. Fahrzeugbreitenbeschränkungen auf öffentlichen Straßen können den Transport breiter Vorsätze an der Vorderseite eines Mähdreschers verbieten.

Eine Lösung des durch den breiten Vorsatz bedingten Transportproblems ist, den Vorsatz auf einem Wagen zu platzieren und den Vorsatz in Längsrichtung zu ziehen. Diese Lösung hat den Nachteil zusätzlicher Kosten und der Aufbewahrung des Wagens. Ein anderes Problem ist, dass die Ernte an einer Stelle des Feldes beginnen kann, an der der Wagen zurückgelassen wird, während die Ernte an einer anderen Stelle oder sogar auf einem mehrere Kilometer vom Wagen entfernten Feld beendet wird.

Eine andere Lösung für das durch den breiten Vorsatz bedingte Transportproblem ist, den Vorsatz mit einer Schleppeinrichtung auszustatten, wie Rädern und einer Anhängedeichsel, die es ermöglicht, den Vorsatz zum Transport auf seinen eigenen Rädern in Längsrichtung zu ziehen. Dadurch ist kein separater Wagen mehr nötig. Viele derartige Vorsätze haben Komponenten, die vom Vorsatz entfernt und auf dem Feld abgelegt werden, wenn das Ernten beginnt. Wie bei einem Anhänger können diese Komponenten mehrere Kilometer vom Mähdrescher entfernt sein, wenn sie wieder benötigt werden. Einige Mähdrescher wurden mit einer an Bord befindlichen Schleppeinrichtung ausgestattet, jedoch ist es häufig schwierig, den Vorsatz zwischen Transport- und Erntekonfiguration umzustellen. Andere Vorsätze werden entweder nach oben oder nach vorn gefaltet, um die Vorsatzbreite für den Transport zu vermindern.

Die der Erfindung zugrunde liegende Aufgabe wird darin gesehen, ein Transportsystem für einen Vorsatz für eine Erntemaschine, wie einen Mähdrescher oder Feldhäcksler, bereitzustellen, der die oben beschriebenen Nachteile vermeidet.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, ein Gerät mit einem Rad zu versehen, das beim Transport des Geräts am Gerät fixiert ist, Bodenkontakt aufweist und sich parallel zur Transportrichtung des Geräts erstreckt. Die Achse des Rades ist an einem Schwenkarm befestigt, der sich in Transportposition in einer ersten Richtung erstreckt, die in der Regel bezüglich der Transportrichtung seitlich nach unten und außen verläuft. In der Stauposition, in der das Rad nicht für den Transport benötigt wird, erstreckt sich der Schwenkarm in eine zweite Richtung, die sich von der ersten Richtung unterscheidet. In der Stauposition kann das Gerät einen Arbeitsvorgang, wie z. B. einen Ernteeinbringungs- oder Bodenbearbeitungsvorgang durchführen; man könnte daher auch von einer Arbeitsposition sprechen. Eine Strebe dient zur Abstützung des Schwenkarms am Gerät. Die Strebe ist mit dem Schwenkarm gekoppelt und in der Transportposition an einer ersten Stelle des Geräts und in der Stauposition an einer zweiten Stelle des Geräts befestigt.

Auf diese Weise erhält man ein Gerät, bei dem der Schwenkarm zwei Stellungen einnehmen kann, eine Transportposition und eine Stauposition. In beiden Positionen wird er durch die Strebe abgestützt, so dass er stets sicher gehaltert wird. Es ist nur erforderlich, die Strebe vom Gerät zu lösen, den Schwenkarm zu verschwenken und die Strebe wieder am Gerät zu befestigen. Das Gerät kann also unproblematisch von einer Transportkonfiguration in eine Arbeitskonfiguration umgewandelt werden, in der der Schwenkarm eine Stauposition einnimmt, und umgekehrt.

Vorzugsweise ist die Achse des Rades lösbar am Schwenkarm befestigt. Sie kann dann in bei in die Stauposition verbrachtem Schwenkarm an einer zweiten Stelle des Geräts befestigt werden. Zur lösbaren Befestigung der Achse des Rades am Gerät dient vorzugsweise ein Stift, der ohne zusätzliches Werkzeug gelöst und wieder befestigt werden kann. Im Speziellen kann der Stift dazu dienen, die in einer Achsaufnahme drehbar (und herausziehbar) gelagerte Achse zu sichern.

Vorzugsweise ist die Stauposition des Rades eine Stützradposition, in der das Rad ein Ende des Geräts beim Arbeitsvorgang abstützt. Denkbar wäre aber auch, das Rad beim Arbeitsvorgang an einer beliebigen anderen Stelle des Geräts anzubringen.

Das am Schwenkarm befestigte Rad ist in der Transportposition vorzugsweise an einer Vorderseite des Geräts angeordnet. Der Begriff Vorderseite bezieht sich auf die Arbeitsrichtung, in der das Gerät in der Regel quer zu seiner Längsrichtung bewegt wird. Beim Transport wird das Gerät hingegen in Längsrichtung gezogen. An einer Rückseite des Geräts kann ein zweites Rad vorgesehen sein, das ebenfalls abnehmbar ist. Das zweite Rad kann ebenfalls an einem Schwenkarm angebracht sein, vorzugsweise ist es jedoch zwar lösbar, jedoch ansonsten starr am Gerät befestigt.

Der Schwenkarm kann sich in der Transportposition und in der Stauposition in einer bezüglich der Transportrichtung seitlichen Richtung erstrecken. In der Transportposition erstreckt er sich vorzugsweise nach unten und außen. Die Strebe kann dann an der bezüglich der Arbeitsrichtung vorderen Seite des Geräts angebracht sein; bei einem Schneidwerk in der Nähe des Mähwerksbalkens. Die Strebe wird zum Schwenken des Schwenkarms gelöst, so dass er in die Stauposition verschwenkt werden kann. Der Schwenkarm verläuft in der Stauposition zweckmäßigerweise horizontal entlang der Unterseite des Geräts, um es möglichst nahe an den Erdboden verbringen zu können. In dieser Position erstreckt sich die Strebe vorzugsweise an der Rückseite des Geräts nach oben und ist an der Rückseite des Geräts arretiert. Der Schwenkarm ist daher bevorzugt um eine parallel zur Transportrichtung des Gerät verlaufende Achse schwenkbar.

Die Befestigung der Strebe am Schwenkarm kann an einer am äußeren Ende des Schwenkarms angeordneten Hülse erfolgen, in der die Achsaufnahme zur lösbaren Aufnahme der Achse des Rades angeordnet ist. Die Strebe ist an der Achsaufnahme schwenkbar gelagert. Ein Stift arretiert in der Transportposition die Strebe am Schwenkarm und unterbindet eine Drehung der Strebe und des Schwenkarms.

Am anderen Ende der Strebe kann ein Befestigungsstift angeordnet sein, der zur lösbaren Arretierung der Strebe an der ersten und zweiten Stelle des Geräts dient.

Handelt es sich bei dem Gerät um einen Erntevorsatz, weist es einen Anbringungsrahmen auf, mit dem es an einem Erntefahrzeug, wie z. B. einem Mähdrescher anbringbar ist. Ein Rad, insbesondere das oben erwähnte zweite Rad, kann am Anbringungsrahmen lösbar befestigt sein.

In der Regel weist das Gerät einen Rahmen auf, an dem die Strebe und/oder der Schwenkarm befestigt sind. Der Rahmen kann einen oberen Träger, ein vorderes Querelement und rechtwinklige, sich dazwischen erstreckende Trägerarme aufweisen. An den äußeren Enden des Trägers und des vorderen Querelements können Seitenwände angeordnet sein. Bei diesem Rahmen ist der Schwenkarm vorzugsweise an einem Bodenabschnitt eines Trägerams gelagert. Die Strebe kann in der Stauposition am oberen Träger und in der Transportposition am Bodenabschnitt eines Trägerarms befestigt sein.

Weiterhin kann eine Anhängedeichsel herausziehbar am Boden des Geräts gelagert sein. Die Anhängedeichsel kann an einem Ende des Geräts herausgezogen und durch Stifte zum Transport gesichert werden. Eine Stütze der Anhängedeichsel kann lösbar an der Anhängedeichsel angebracht sein, um die herausgezogene Anhängedeichsel oberhalb des Erdbodens abzustützen. Die Stütze kann beim Arbeits- (Ernte-) Vorgang entfernt und an einer Klammer am Ende des Geräts befestigt werden.

Das der Anhängedeichsel gegenüberliegende Ende des Geräts kann mit einem Paar Beleuchtungsleisten ausgestattet sein. Die Beleuchtungsleisten weisen eine Stauposition auf, in der sie während des Arbeitsvorganges durch eine Abdeckung vor Beschädigung geschützt sind. Die Abdeckung wird entfernt, um Zugang zu den Beleuchtungsleisten zu bekommen; sie werden in ihre Transportpositionen verbracht, in der sie vom Gerät abstehen, um die ganze Breite des Geräts während des Transports anzuzeigen. Zusätzlich ist ein Hinweisschild für sich langsam bewegende Fahrzeuge von einer Stauposition nahe der Abdeckung in eine sichtbare Transportposition verbringbar. Die Abdeckung wird dann beim Transport wieder angebracht.

Alle bewegbaren Komponenten des Transportsystems werden durch Befestigungsstifte festgehalten, was eine Umwandlung des Geräts zwischen Transportkonfiguration und Arbeitskonfiguration ohne einen Einsatz von Handwerkzeugen zur Handhabung von Befestigungen ermöglicht.

In den Zeichnungen ist ein nachfolgend näher beschriebenes Ausführungsbeispiel der Erfindung dargestellt. Es zeigen:
- Fig. 1: eine perspektivische Ansicht eines erfindungsgemäßen Vorsatzes mit einem integrierten Transportsystem, das in der Transportposition dargestellt ist;
- Fig. 2: eine perspektivische rückseitige Ansicht eines der mit dem Boden in Eingriff befindlichen Räder, das in der Transportposition gezeigt ist;
- Fig. 3: eine perspektivische rückseitige Ansicht des Rades der Figur 2;
- Fig. 4: eine perspektivische vorderseitige Ansicht des in Figur 2 gezeigten Rades;
- Fig. 5: eine rückseitige perspektivische Ansicht der Trägerstruktur eines Vorderrades, die die Umwandlung der Trägerstruktur zwischen der Transport- und der Erntestellung zeigt;
- Fig. 6: eine perspektivische rückseitige Ansicht der Trägerstruktur des Vorderrades, die die Stauposition des Vorsatzes zur Ernte wiedergibt;
- Fig. 7: eine rückseitige perspektivische Ansicht des erfindungsgemäßen Vorsatzes, in der die Befestigung des Stützrades an einer Seite des Vorsatzes illustriert ist;
- Fig. 8,9: perspektivische Ansichten der Anhängedeichsel in ihrer zurückgezogenen, verstauten Position bzw. ihrer ausgezogenen Zug-Position;
- Fig. 10: eine vergrößerte perspektivische Ansicht des inneren Endes der Anhängedeichsel in der ausgezogenen Zug-Position; und

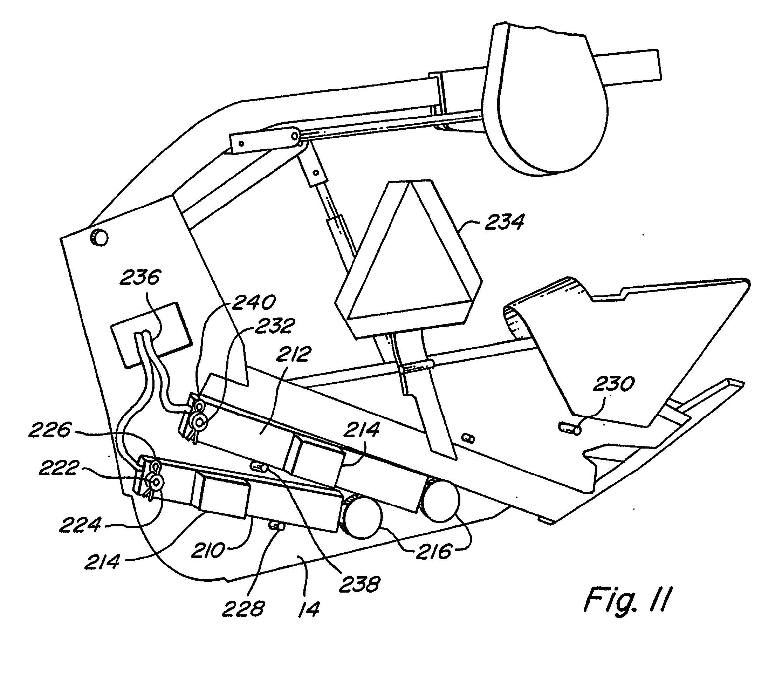

- Fig. 11: eine Rückansicht des Vorsatzes, in der die Beleuchtungsleisten des Transportsystems in verstauter Position wiedergegeben sind.

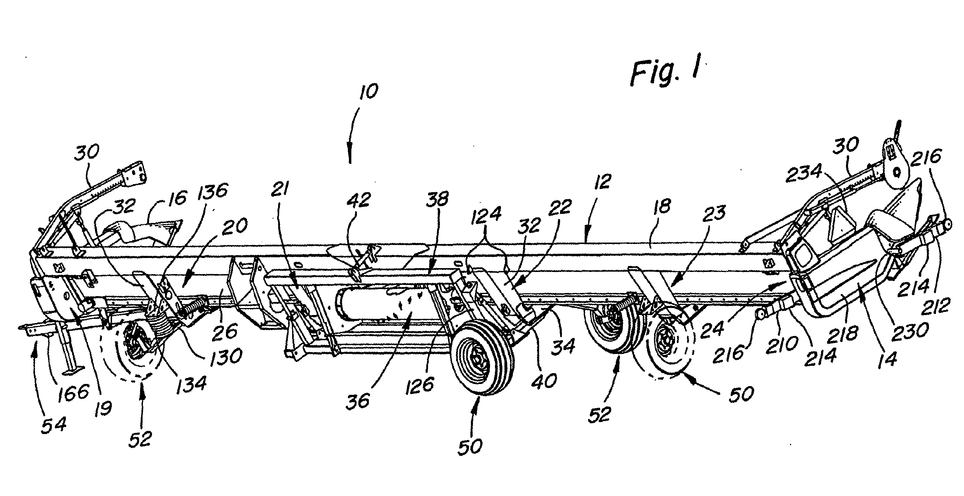

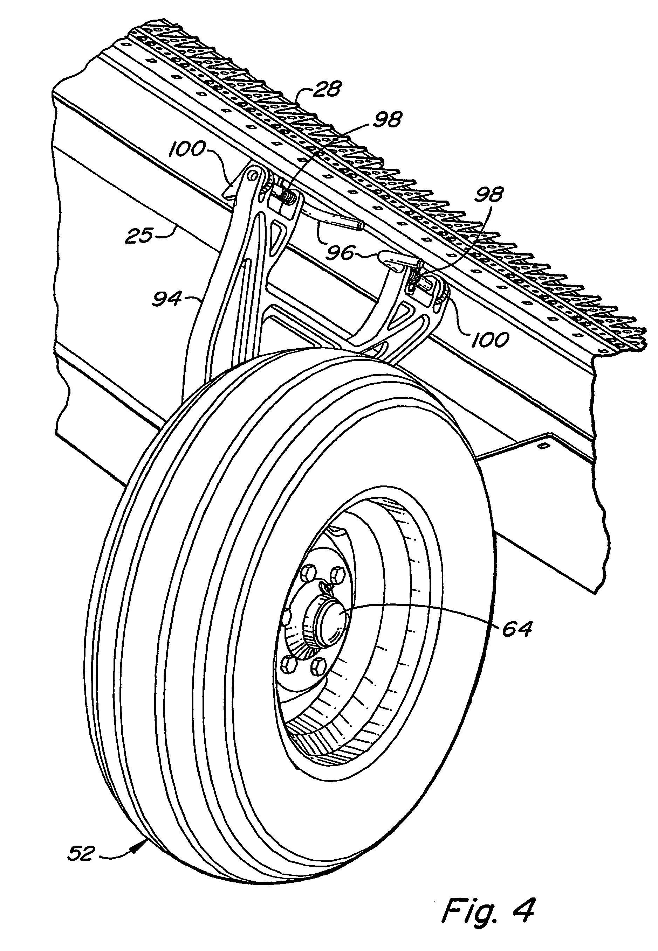

In Figur 1 ist ein Vorsatz für einen Mähdrescher, der ein integriertes Transportsystem gemäß der vorliegenden Erfindung aufweist dargestellt und insgesamt mit 10 gekennzeichnet. Der Vorsatz 10 umfasst einen Hauptrahmen 12, der sich seitlich zwischen gegenüberliegenden Enden 14 und 16 erstreckt. Der Hauptrahmen 12 umfasst einen oberen Träger 18, der sich zwischen den gegenüberliegenden Enden 14 und 16 erstreckt, eine Mehrzahl an Trägerarmen 19, 20, 21, 22, 23, 24, die sich vom oberen Träger 18 nach unten und vorn erstrecken, und ein vorderes Querelement 25 (Figur 4), welches an den Trägerarmen 19, 20, 21, 22, 23, 24 an der Vorderseite des Vorsatzes festgeschweißt ist. Der Vorsatz 10 umfasst eine Rückwand 26 und ein Mähwerksbalken 28 ist entlang des vorderen Querelements 25 angeordnet, um stehendes Erntegut abzuschneiden. Eine nicht dargestellte Haspel ist an zwei Haspelträgerarmen 30 an den beiden Enden 14, 16 in konventioneller Weise befestigt.

Die inneren Trägerarme 20, 21, 22, 23 des Hauptrahmens 12 umfassen einen aufrechten Hinterabschnitt 32 hinter der Rückwand 26 und einen Bodenabschnitt 34, der sich vom unteren Ende des aufrechten Hinterabschnitts 32 zum vorderen Querelement 25 erstreckt. Die Rückwand 26 weist eine Öffnung 36 zur Aufnahme abgeschnittenen Ernteguts auf, um dieses Gut nach hinten in den Schrägförderer eines konventionellen Mähdreschers (nicht gezeigt) zu fördern.

Ein Anbringungsrahmen 38 wird verwendet, um den Vorsatz 10 an dem Schrägförderer eines Mähdreschers zu befestigen. Der Anbringungsrahmen 38 umfasst sich nach vorn erstreckende Blattfedern 40, von denen nur eine gezeigt ist, die am Bodenabschnitt 34 von zweien der inneren Trägerarme 21, 22 angebracht sind, um eine federnde Aufhängung zwischen dem Hauptrahmen 12 und dem Anbringungsrahmen 38 bereitzustellen. Ein Spannanker 42 koppelt den oberen Träger 18 des Hauptrahmens 12 an den Anbringungsrahmen 38. Der Anbringungsrahmen 38 ist in konventioneller Weise an den Schrägförderer eines Mähdreschers gekoppelt.

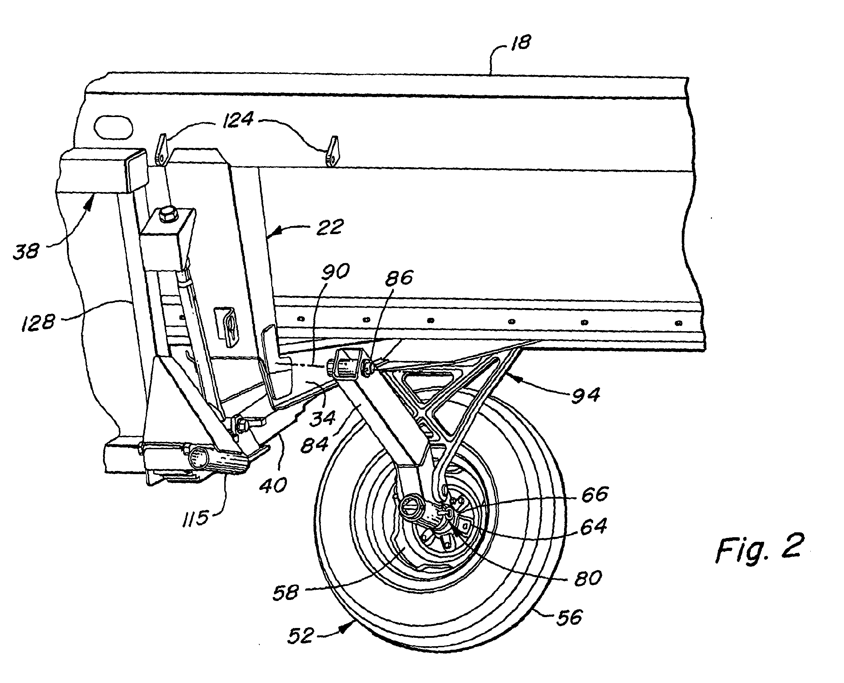

Wegen der Breite des Vorsatzes 10 ist er mit einem Transportsystem ausgestattet, das erlaubt, den Vorsatz in seiner Längsrichtung zu ziehen. Das Transportsystem umfasst ein Paar mit dem Boden in Eingriff befindlicher Zusammenbauten aus Reifen und Rädern, die jeweils einen aufpumpbaren Reifen 56 und ein Metallrad 58 (Figur 2) umfassen. Die Zusammenbauten aus Reifen 56 und Rädern 58 werden im folgenden als "Rad" bezeichnet, und es ist anzumerken, dass der Ausdruck "Rad" sich sowohl auf den aufpumpbaren Reifen 56 und das Metallrad 58 bezieht. Eines der mit dem Boden in Eingriff befindlichen Räder 50 ist an der Rückseite des Vorsatzes 10 befestigt, während ein anderes mit dem Boden in Eingriff befindliches Rad 52 am der Vorderseite des Vorsatzes 10 angebracht ist. Die Räder 50, 52 tragen den Vorsatz 10 sowohl vor als auch hinter seinem Massenschwerpunkt. Eine ausziehbare Anhängedeichsel 54 ist an einem Ende des Vorsatzes 10 vorgesehen, um den Vorsatz 10 an ein Zugfahrzeug anzuhängen. Abhängig von der Breite des Vorsatzes 10 können die mit dem Boden in Eingriff befindlichen Räder 50 und 52 auch als (nachlaufend gelenkte) Stützräder, wie in gestrichelten Linien gezeigt, während der Ernte an jeder Seite der Erntemaschine verwendet werden.

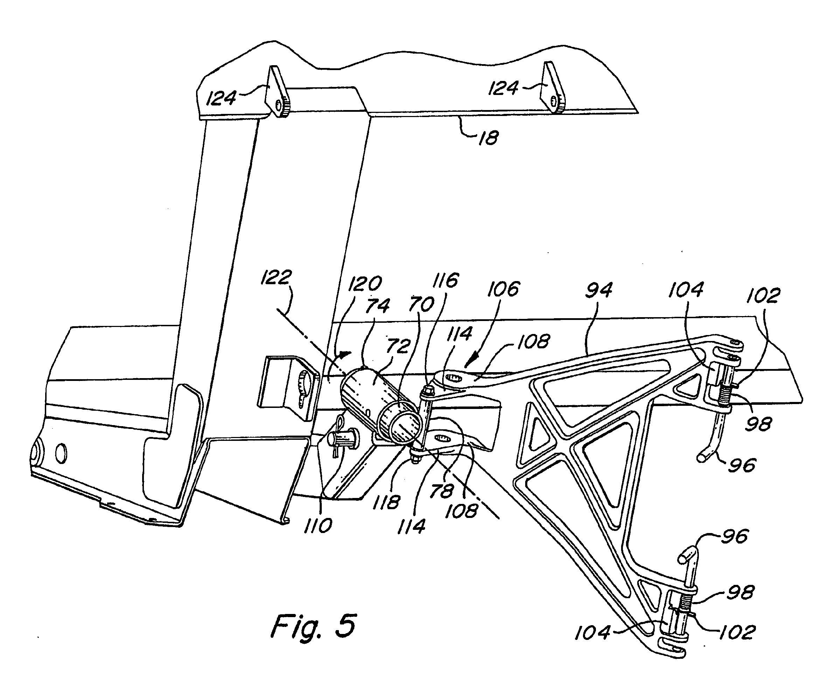

In den Figuren 2, 3 und 4 wird die Befestigung des vorderen Rades 52 in der Transportposition gezeigt. Das Rad 52 ist an einer Nabe 64 befestigt. Die Nabe 64 wird drehbar von einer Achse 66 durch einen Lagerzusammenbau (nicht gezeigt) in für drehbare Räder konventioneller Weise gehaltert. Die Achse 66 ist in eine Achsaufnahme 70 in Form eines hohlen Rohrs eingesetzt. Die Achsaufnahme 70 ist drehbar innerhalb einer Hülse 72 befestigt. Die Achsaufnahme 70 wird in der Hülse 72 durch einen quer verlaufenden Stift 74, der die Achsaufnahme 70 an einem Ende der Hülse 72 durchdringt, und durch ein quer verlaufendes Rohr 78 (Figur 5), das an der Achsaufnahme 70 am gegenüberliegenden Ende der Hülse 72 verschweißt ist, befestigt. Das Rohr 78 und der Stift 74 setzen die Achsaufnahme 70 in der Hülse 72 fest.

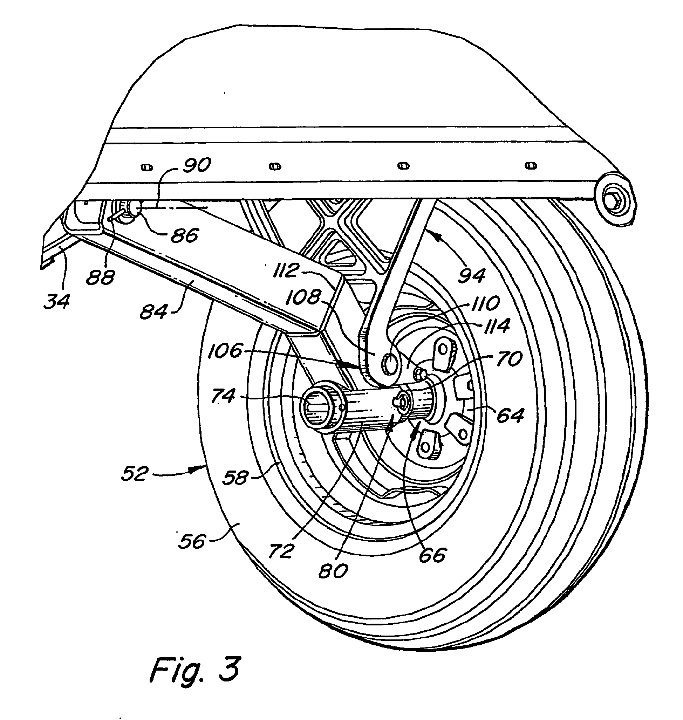

In der in Figur 3 gezeigten Transportposition durchdringt ein Stift 80 die Hülse 72, die Achsaufnahme 70 und die Achse 66. Der Stift 80 haltert daher die Achse 66 innerhalb der Achsaufnahme 70 und verhindert auch eine Drehung der Achse 66 und der Achsaufnahme 70 innerhalb der Hülse 72.

Die Hülse 72 ist an das Ende eines Schwenkarms 84 geschweißt. Der Schwenkarm 84 ist an den Bodenabschnitt 34 des Trägerarms 22 gekoppelt. Der Schwenkarm 84 ist an einem Schwenkstift 86 befestigt, der durch einen Haltestift 88 an Ort und Stelle gehalten wird. Der Schwenkarm 84 ist um die Achse 90 des Schwenkstifts drehbar. Die Achse 90 erstreckt sich quer zur Fahrtrichtung des Vorsatzes 10 während des Erntens.

In der Transportposition erstreckt sich der Schwenkarm 84 vom Schwenkstift 86 nach unten und vorn. Der Schwenkarm 84 wird in dieser Position durch eine Strebe 94 gehalten. Die Strebe 94 ist an der Vorderseite des vorderen Querelements 25 durch ein Paar Befestigungsstifte 96, die durch Federn 98 vorgespannt sind, abnehmbar befestigt. Die Befestigungsstifte 96 erstrecken sich durch Öffnungen in Flanschen 100, die an das vordere Befestigungselement 25 geschweißt sind. Die Befestigungsstifte 96 können in von den Flanschen 100 abgenommenen Stellungen durch Querstifte 102 gehalten werden, die die Federn 98 sichern. Diese Querstifte 102 sind an Blöcken 104 gelagert, die am Ende der Strebe 94 geformt (gegossen) sind, um die Befestigungsstifte 96 in den zurückgezogenen Positionen zu haltern, wie in Figur 5 gezeigt. Dieses erleichtert die Bewegung der Strebe 94 zwischen der Stau- und Transportposition, wobei es möglich ist, die Strebe 94 anzubringen, ohne dass es nötig wäre, die Befestigungsstifte 96 manuell in zurückgezogener Stellung zu halten. Das untere Ende 106 der Strebe 94 ist gegabelt und weist zwei Flansche 108 auf, die an gegenüberliegenden Seiten des Schwenkarms 84 angeordnet sind, wie in Figur 3 gezeigt wird. Das untere Ende 106 der Strebe 94 ist durch einen Stift 110 mit dem Schwenkarm 84 gekoppelt, der sich sowohl durch die beiden Flansche 108 der Strebe 94 als auch durch den Schwenkarm 84 erstreckt. In der Transportposition, in der die Strebe 94 an das vordere Querelement 25 und den Schwenkarm 84 gekoppelt ist, stützt die Strebe 94 den Schwenkarm 84 und unterbindet eine Drehung des Schwenkarms 84 um den Schwenkstift 86.

Bei der bevorzugten Ausführungsform ist der Schwenkarm 84 ein Schweißteil, das aus Rohrabschnitten aufgebaut ist, die an der Verbindungsstelle 112 zusammengeschweißt sind. Die Strebe 94 ist ein Eisengussteil. Zweite Flansche 114 erstrecken sich vom Ende 106 der Strebe 94 und sind an gegenüberliegenden Enden des Rohrs 78 positioniert, welches an der Achsaufnahme 70 angeschweißt ist. Ein Schwenkbolzen 116 erstreckt sich durch die Flansche 114 und das Rohr 78 und wird durch eine Mutter 118 gesichert.

Der Vorsatz 10 wird dadurch von der Transportkonfiguration in die Erntekonfiguration umgewandelt, dass der Vorsatz 10 zuerst angehoben und das Rad 52 entfernt wird. Das Rad 52 wird durch Herausziehen des Stiftes 80 entfernt, was ermöglicht, die Achse 66 aus der Achsaufnahme 70 herauszuziehen. Bei entferntem Rad 52 wird das obere Ende der Strebe 94 vom vorderen Querelement 25 abgekoppelt. Das erlaubt dem Schwenkarm 84, sich um den Schwenkstift 86 nach unten und hinten zu drehen, so dass er sich vom Schwenkstift 86 am Bodenabschnitt 34 des Trägerarms 20 nach hinten erstreckt. Der Stift 110, der das Ende 106 der Strebe 94 an den Schwenkarm 84 koppelt, wird von der Strebe 94 und dem Schwenkarm 84 entfernt. Die Strebe 94 wird um den Schwenkbolzen 116 im Rohr 78 gedreht, um die Flansche 108 von den gegenüberliegenden Enden des Schwenkarms 84 abzuziehen. Sobald die Flansche 108 den Schwenkarm 84 freigegeben haben, werden die Strebe 94 und die Achsaufnahme 70 um die Achse 122 der Hülse 72 gedreht, wie durch den Pfeil 120 in Figur 5 gezeigt wird. In Figur 5 ist eine Zwischenposition der Strebe 94 nach einer Drehung der Strebe 94 und der Achsaufnahme 70 von etwa 90 Grad um die Achse 122 der Hülse 72 gezeigt.

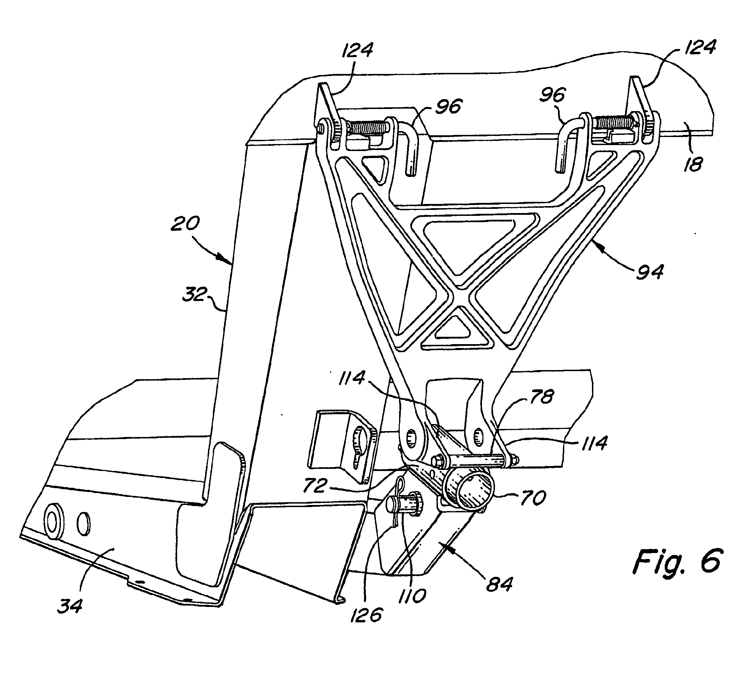

Figur 6 gibt den Schwenkarm 84 und die Strebe 94 in zur Ernte verstauter Position wieder. Das obere Ende der Strebe 94 ist an Befestigungsflanschen 124, die vom oberen Träger 18 abstehen, in derselben Art und Weise befestigt, in der die Strebe 94 in der Transportposition am vorderen Querelement 25 befestigt ist. Die Halterung der Strebe 94 am oberen Träger 18 sichert den Schwenkarm 84 in seiner verstauten Position, in der er sich nach hinten erstreckt, nahe des Bodenabschnitts 34 des Trägerarms 22. Der Stift 110 wird in den Schwenkarm 84 eingesetzt und durch den Halterungsstift 126 gehaltert, um den Stift 110 während des Erntens zu lagern. Der Schwenkarm 84 erstreckt sich in der verstauten Position nicht vom Hauptrahmen 12 des Vorsatzes 10 nach unten, sondern ist entlang des Bodenabschnitts 34 des Trägerarms positioniert. Daher beeinträchtigt der Schwenkarm 84 nicht die Bodenfreiheit des Vorsatzes 10. Wie gezeigt und beschrieben, wird der Schwenkarm 84 ebenfalls zwischen der Stau- und Transportposition durch Handhaben von Stiften verbracht, ohne einen Bedarf an Handwerkzeugen.

Das hintere Rad 50 ist an einer Radnabe 64 und einer Achse 66 befestigt, wie oben bezüglich des Rades 52 beschrieben. Das Rad 50 ist an einer Achsaufnahme 115 (Figur 2) befestigt, die an einem aufrechten Element 128 des Anbringungsrahmens 38 fixiert ist. Das Rad 50 wird in der Achsaufnahme 115 in derselben Weise wie das Rad 52 durch einen Stift befestigt. Die Anordnung der Achsaufnahme 115 am Anbringungsrahmen 38 und ihre Orientierung ist derart, dass sie im wesentlichen mit der Achse der Achsaufnahme 70 des Rades 52 an der Vorderseite des Vorsatzes 10 ausgerichtet ist. Die Räder 50, 52 sind daher miteinander ausgerichtet.

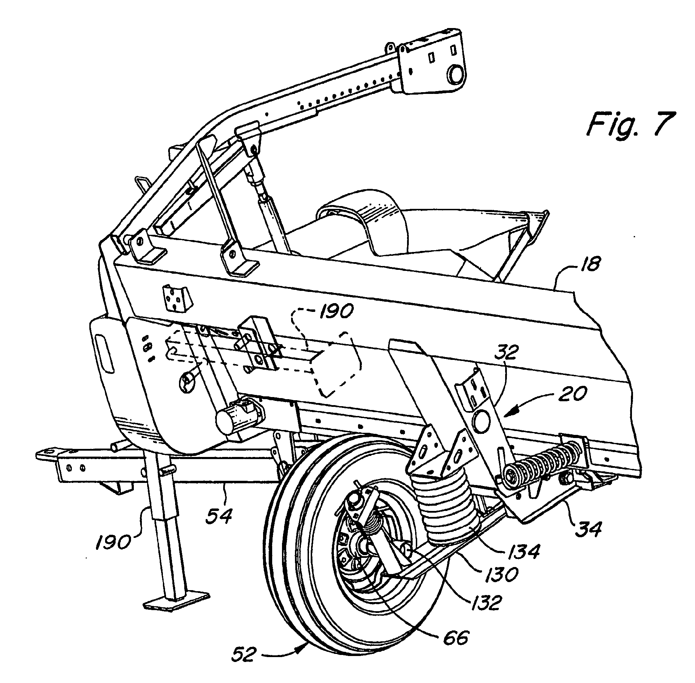

Wenn die Räder 50 und 52 aus ihrer Transportposition entfernt werden, sind sie am oberen Träger 18 in einer (nicht gezeigten) Lagerposition befestigt, oder werden in nachfolgend beschriebener Weise als Stützräder benutzt. Für die Verwendung als Stützrad werden die Räder 50, 52 schwenkbar an den Trägerarmen 20 und 23 gelagert, um die Enden des Vorsatzes 10 während des Erntens zu stützen. In der Figur 7 ist die Kopplung des Rades 52 an den Trägerarm 20 in einer Stützradposition gezeigt. Ein Arm 130 erstreckt sich vom Bodenabschnitt 34 des Trägerarms 20 nach hinten. Das rückwärtige Ende des Arms 130 trägt eine Achsaufnahme 132, die wie die Achsaufnahme 70 gestaltet ist, und nimmt die Achse 66 auf, um das Rad 52 zu befestigen. Der Arm 130 ist drehbar am Trägerarm 20 befestigt und durch ein aufblasbares Luftsackfederungselement 134 gestützt, welches zwischen dem Arm 130 und einer am Trägerarm 20 befestigten Stützklammer 136 angeordnet ist. Das Luftsackfederungselement 134 stellt eine Federung mit einem Luftkissen für das Stützrad 52 bereit. Eine andere Befestigungsstruktur für das Stützrad ist am Trägerarm 23 bereitgestellt, um das andere Rad 50 bei der Ernte in einer Stützradposition zu haltern.

Ob die Räder 50, 52 nun auf dem oberen Träger 18 getragen oder beim Ernten als Stützräder benutzt werden, so bleiben sie am Vorsatz und sind daher verfügbar, wenn das Ernten beendet ist und es wieder nötig wird, den Vorsatz zu transportieren.

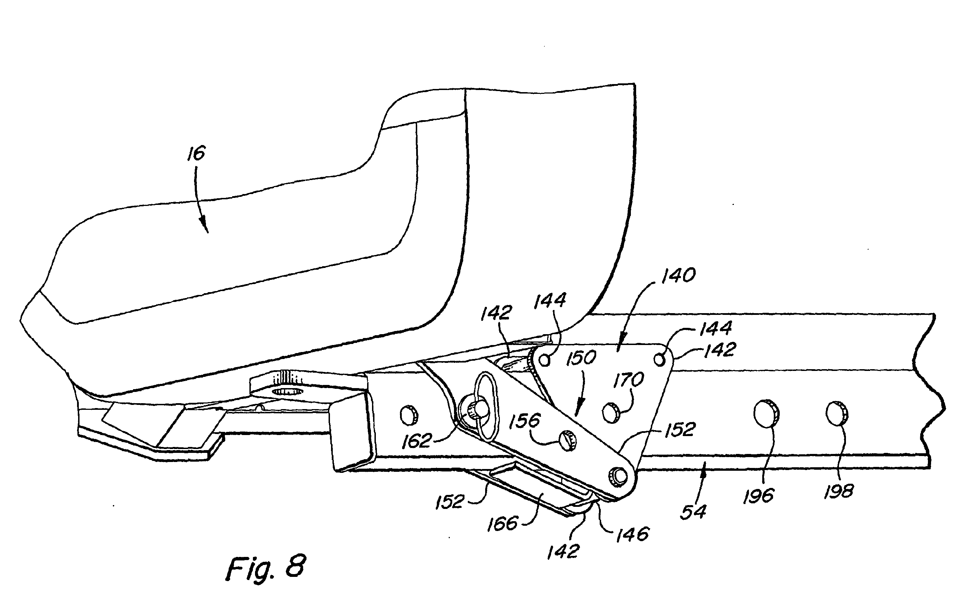

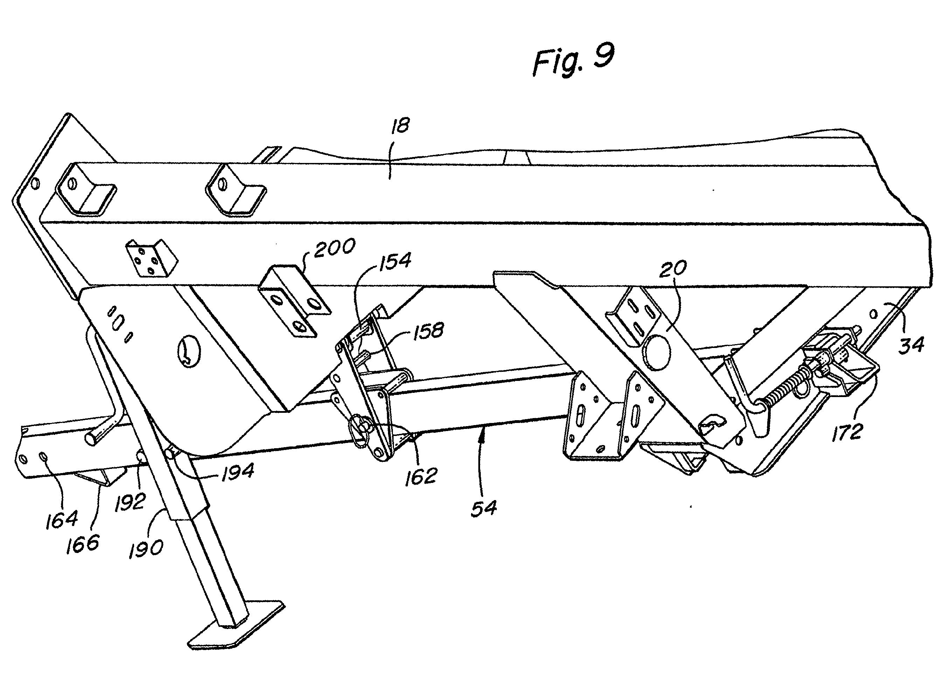

Der Vorsatz 10 umfasst außerdem eine herausziehbare Anhängedeichsel 54, um den Vorsatz in Längsrichtung zu ziehen. Die Anhängedeichsel 54 wird vom Hauptrahmen 12 gehaltert und ist zwischen einer hineingeschobenen, verstauten Position, die in Figur 8 gezeigt ist, und einer herausgezogenen Transportposition, die in Figur 1 und 9 dargestellt ist, bewegbar. Wie in Figur 1 erkennbar ist, ist die Anhängedeichsel 54 am Ende 16 des Vorsatzes 10 befestigt. Die Anhängedeichsel 54 ist ein rohrförmiges Element und in einem Lagergestell 140 gelagert. Das Lagergestell 140 ist aus einem Paar identisch geformter dreieckiger Platten 142, die durch Stifte 144 an den zwei oberen Ecken der Platten 142 voneinander beabstandet gehaltert werden, und durch einen Schwenkstift 146 an der unteren Ecke der Platten 142 gebildet. Die Anhängedeichsel 54 gleitet im Lagergestell 140 zwischen dem Schwenkstift 146 und den beiden oberen Stiften 144.

Das Lagergestell 140 ist wiederum an einem durch außerhalb der Platten 142 des Lagergestells 140 beabstandete Platten 152 gebildeten Schwenkarm 150 befestigt. Der Schwenkarm 150 ist schwenkbar am Trägerarm 19 durch einen Stift 154 befestigt, der in Figur 9 gezeigt ist. Der Schwenkarm 150 weist ein Paar Öffnungen auf, eine untere, in Figur 8 gezeigte Öffnung 156 und eine obere Öffnung 158, die in Figur 9 gezeigt ist. In der eingezogenen Stauposition der Anhängedeichsel 54 erstreckt sich ein Stift 162 durch die obere Öffnung 158 des Schwenkarms 150 und durch die Öffnung 164 in der Anhängedeichsel 54 nahe des äußeren Endes der Anhängedeichsel 54, um die Anhängedeichsel 54 am Schwenkarm 150 zu haltern.

Die Anhängedeichsel 54 weist eine Anlageplatte 166 auf, die sich nach unten, unter die untere Oberfläche der Anhängedeichsel 54 erstreckt. Wenn die Anhängedeichsel 54 in die eingezogene Stauposition verschoben wird, berührt die Anlageplatte 166 den Stift 146, was bewirkt, dass sich der Schwenkarm 150 nach innen und oben dreht, um die Anhängedeichsel 54 anzuheben. Wenn die Öffnung 158 im Schwenkarm 150 und die Öffnung 164 der Anhängedeichsel 54 ausgerichtet sind, wird der Stift 162 hineingesetzt, um die Anhängedeichsel 54 in der eingezogenen Stauposition zu arretieren. In dieser angehobenen Position liegt die Anhängedeichsel 54 an den Bodenabschnitten 34 der Trägerarme 19, 20 an.

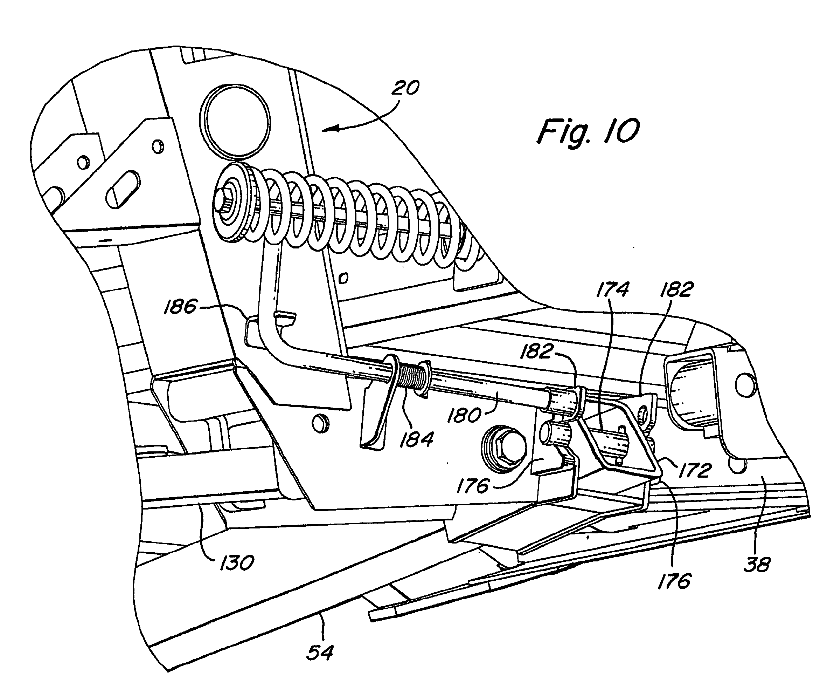

Die Anhängedeichsel 54 ist in Figur 9 in einer ausgezogenen Zugposition gezeigt. In dieser Position ist der Schwenkarm 150 nach unten verbracht und der Stift 162 durch die untere Öffnung 156 des Schwenkarms 150, die mittlere Öffnung 170 im Lagergestell 140 und durch eine Öffnung der Anhängedeichsel gesteckt. Dadurch sind der Schwenkarm 150, das Lagergestell 140 und die Anhängedeichsel miteinander verriegelt. In der ausgezogenen Position ist das Ende 172 der Anhängedeichsel 54 in der Nähe des Bodenabschnitts 34 des Trägerarms 20, wie am besten in Figur 10 dargestellt ist. Ein weiteres Herausziehen der Anhängedeichsel 54 ist durch einen von der Anhängedeichsel 54 getragenen Querstift 174 unterbunden. Der Querstift 174 sitzt in V-förmigen Platten 176, die sich quer vom Bodenabschnitt 34 des Trägerarms 20 erstrecken. Ein federvorgespannter Riegelstift 180 ist über das Ende 172 der Anhängedeichsel 54 bewegbar und in Platten 182 an jeder Seite der Anhängedeichsel 54 gehaltert. Dadurch wird vermieden, dass die Anhängedeichsel 54 sich während des Transports des Vorsatzes 10 nach innen, in Richtung auf die eingezogene Stellung zu bewegt. Der Riegelstift 180 wird durch eine Feder 184 in die Riegelstellung zwischen den zwei Platten 182 vorgespannt. Eine Hakenhalterungsplatte 186 ist am Trägerarm 20 bereitgestellt, um den Stift 180 in einer offenen Stellung zu haltern, wenn die Anhängedeichsel 54 nach innen in ihre eingezogene Stauposition verbracht wird.

Stifte 192, 194 (Figur 9) haltern lösbar eine Stütze 190 für die Anhängedeichsel 54 an der Anhängedeichsel 54. Die Stifte 192, 194 sind durch die Öffnungen 196, 198 (Figur 8) in der Anhängedeichsel 54 gesteckt. Die Stifte 192 und 194 sind anderen Durchmessers als die Öffnungen 196, 198, um sicherzustellen, dass die Stütze 190 an der richtigen Seite der Anhängedeichsel angebracht ist. Wenn der Vorsatz 10 erntet, ist die Stütze 190 an einer Klammer 200 (Figur 9) angebracht, die an den oberen Träger 18 geschweißt ist. Die Klammer 200 hat ein Paar Öffnungen, die mit den Öffnungen 196, 198 in der Anhängedeichsel 54 identisch sind, um die Stütze 190 daran zu befestigen. Dadurch, dass die Anhängedeichsel 54 und die Stütze 190 während des Erntens an Bord des Vorsatzes 10 gelagert sind, werden diese Komponenten beim Vorsatz verbleiben und verfügbar sein, wenn der Vorsatz 10 wieder in die Transportposition umkonfiguriert ist.

Wiederum wird auf Figur 1 verwiesen, in der der Vorsatz 10 mit am Ende 14 des Vorsatzes 10 angebrachten Leuchten gezeigt ist, die der Anhängedeichsel 54 gegenüberliegen. Beleuchtungsleisten 210 und 212 erstrecken sich vor und hinter dem Vorsatz. Jede Beleuchtungsleiste 210, 212 trägt eine oder mehrere Leuchten, wie Leuchten 214 und 216. Die Leuchten 214 und 216 definieren die Breite des Vorsatzes 10, wenn er in Längsrichtung transportiert wird. Die Beleuchtungsleisten 210 und 212 sind von der ausgezogenen Position, wie sie in Figur 1 gezeigt ist, in Staupositionen nahe der Abdeckung 218 der Endwand des Vorsatzes 10 verbringbar. Um die Leuchten 214, 216 in ihre Stauposition zu verbringen, wird zuerst die Abdeckung 218 entfernt. Die Beleuchtungsleiste 210 ist auf einem Pfosten 222 gelagert und weist ein um den Pfosten 222 umlaufendes Rohr 224 auf. Ein Federriegelstift 226 hält die Beleuchtungsleiste 210 in einer arretierten Position auf dem Pfosten 222. Bei abgenommener Abdeckung 218 und entferntem Federriegelstift 226 wird die Beleuchtungsleiste 210 nach außen zum Ende des Pfostens 222 bewegt und um etwa 180 Grad zur Stauposition gedreht, in der sie auf einem Anschlag 228 ruht. Der Federriegelstift 226 wird wieder durch den Pfosten 222 und das Rohr 224 der Beleuchtungsleiste 210 gesteckt, um die Beleuchtungsleiste 210 in der Stauposition zu haltern.

Die Beleuchtungsleiste 212 ist in ähnlicher Weise an einem Pfosten 230 befestigt. Die Beleuchtungsleiste 212 wird vom Pfosten 230 abgenommen und wieder auf einem zweiten Pfosten 232 befestigt, so dass die Beleuchtungsleiste 212 nahe der Beleuchtungsleiste 210 gelagert wird und an einem Anschlag 238 anliegt. Die Beleuchtungsleiste 212 wird auf den Pfosten 230, 232 durch einen Federverriegelungsstift 240 gehaltert. Das Hinweiszeichen 234 für sich langsam bewegende Fahrzeuge wird ebenfalls über die zwei Beleuchtungsleisten 210, 212 ohne die Benutzung von Handwerkzeugen nach unten geschwenkt. Die Abdeckung 218 wird dann in eine Position zurück verbracht, in der sie die Beleuchtungsleisten 210, 212 und das Hinweiszeichen 234 während des Erntens abdeckt. Die Abdeckung 218 schützt die Beleuchtungsleisten 210, 212 während des Erntens vor Beschädigung. Die Beleuchtungsleisten 210, 212 sind elektrisch mit einem Kabelbaum 236 verbunden, der sich über die Länge des Vorsatzes erstreckt und an ein Zugfahrzeug gekoppelt ist, um die elektrischen Lampen in bekannter Weise mit elektrischer Leistung zu versorgen.

Die Komponenten des Transportsystems der vorliegenden Erfindung sind bei der Ernte sämtlich an Bord des Vorsatzes gespeichert. Der Vorsatz 10 kann ohne Verwendung von Handwerkzeugen zwischen einer Transport- und einer Erntekonfiguration umgewandelt werden. Der Schwenkarm 84 und die Strebe 94 sind die einzigen das Rad 52 stützenden Elemente, die zwischen Transport- und Erntepositionen zu bewegen sind, so dass man einen Vorsatz erhält, der ein Minimum an beim Umwandeln zwischen Transport- und Erntekonfiguration zu bewegenden und wieder anzubringenden Komponenten aufweist.

Das Transportsystem gemäß der vorliegenden Erfindung wurde im Kontext eines Schneidwerks eines Mähdreschers beschrieben. Das Transportsystem kann jedoch bei anderen Geräten verwendet werden, die bei der Verwendung auf dem Feld eine große Breite aufweisen. Sä- und Bodenbearbeitungsgeräte sind zwei Beispiele breiter Geräte, für die besondere Maßnahmen für den Transport auf einer Straße notwendig sind. Das integrierte erfindungsgemäße Transportsystem kann in diese und andere Geräte integriert werden.

## Patentansprüche

1. Landwirtschaftliches Gerät mit einem zwischen einer Transport - und einer Stauposition verbringbarem Rad (52), das in einer Transportposition parallel zur Transportrichtung des Geräts am Gerät fixierbar und drehbar auf einer Achse (66) gelagert und in Bodenkontakt bringbar ist, wobei die Achse (64) des Rads (52) in der Transportposition an einem um eine sich quer zur fahrtrichtung während der Arbeit erstreckende Achse drehbar am Gerät angebrachten Schwenkarm (84) befestigbar ist, der sich vom Gerät in einer ersten Richtung erstreckt, und der in eine Stauposition verbringbar ist, in der er sich in eine zweite Richtung erstreckt, und wobei eine mit dem Schwenkarm (84) gekoppelte Strebe (94) den Schwenkarm (84) sowohl in der Transportposition als auch in der Stauposition haltert, **dadurch gekennzeichnet, dass** die Strebe (94) in der Transportposition an einer ersten Stelle des Geräts und in der Stauposition an einer zweiten Stelle des Geräts lösbar befestigt ist.

2. Gerät nach Anspruch 1, **dadurch gekennzeichnet, dass** die Achse (66) des Rades (52) lösbar am Schwenkarm (84) befestigt ist.

3. Gerät nach Anspruch 1 oder 2, **dadurch gekennzeichnet, dass** die Achse (66) des Rades (52) in der Stauposition an einer zweiten Stelle des Geräts befestigbar ist.

4. Gerät nach einem der Ansprüche 1 bis 3, **gekennzeichnet durch** wenigstens einen Stift (80) zur lösbaren, werkzeuglosen Befestigung des Rades (52) am Gerät in der Transportposition und der Stauposition.

5. Gerät nach Anspruch 4, **dadurch gekennzeichnet, dass** der Stift (80) sich durch eine die Achse (66) drehbar aufnehmende Achsaufnahme (70) und die Achse (66) erstreckt, wobei eine Drehung der Achse (66) in der Achsaufnahme (70) durch den Stift (80) unterbunden ist.

6. Gerät nach Anspruch 3, 4 oder 5, **dadurch gekennzeichnet, dass** die Stauposition des Rades (52) eine Stützradposition ist, in der das Rad (52) ein Ende (14, 16) des Geräts bei einem Arbeitsvorgang abstützt.

7. Gerät nach einem der vorhergehenden Ansprüche, **dadurch gekennzeichnet, dass** das Rad (52) sich in der Transportposition an einer Vorderseite des Geräts befindet, und dass ein weiteres Rad (50) an einer Rückseite des Geräts angeordnet ist, wobei die Vorderseite sich bezüglich der Arbeitsrichtung des Geräts vor der Rückseite befindet.

8. Gerät nach einem der vorhergehenden Ansprüche, **dadurch gekennzeichnet, dass** sich die Strebe (94) in der Stauposition an der bezüglich der Arbeitsrichtung des Geräts rückwärtigen Seite des Geräts nach oben erstreckt.

9. Gerät nach einem der vorhergehenden Ansprüche, **dadurch gekennzeichnet, dass** der Schwenkarm (84) um eine parallel zur Transportrichtung des Geräts verlaufende Achse schwenkbar ist.

10. Gerät nach einem der Ansprüche 2 bis 9, **dadurch gekennzeichnet, dass** am äußeren Ende des Schwenkarms (84) eine Hülse (72) angeordnet ist, in der die Achsaufnahme (70) zur lösbaren Aufnahme der Achse (66) des Rades (52) angebracht ist, dass an der Achsaufnahme (70) die Strebe (94) schwenkbar gelagert ist, und dass ein Stift (110) in der Transportposition die Strebe (94) am Schwenkarm (84) festlegt und eine Drehung der Strebe (94) unterbindet.

11. Gerät nach einem der vorhergehenden Ansprüche, **dadurch gekennzeichnet, dass** die Strebe (94) an der ersten und zweiten Stelle des Geräts durch einen Befestigungsstift (96) befestigbar und ohne Werkzeug umsetzbar ist.

12. Gerät nach einem der vorhergehenden Ansprüche, **dadurch gekennzeichnet, dass** es ein landwirtschaftlicher Erntevorsatz (10) ist, der mit einem Anbringungsrahmen (38) versehen ist, mit dem er an einem Erntefahrzeug, wie einem Mähdrescher, anbringbar ist.

13. Gerät nach einem der vorhergehenden Ansprüche, **dadurch gekennzeichnet, dass** ein Rahmen (12) des Geräts einen oberen Träger (18), der sich zwischen gegenüberliegenden Enden des Geräts am oberen hinteren Teil des Geräts erstreckt, ein vorderes Querelement (25), der sich an der Vorderkante zwischen den gegenüberliegenden Enden des Geräts erstreckt, und eine Mehrzahl von Trägerarmen (19 - 24) die mit dem oberen Träger (18) und dem vorderen Querelement (25) verlaufen und mit ihnen verbunden sind und einen aufrechten Hinterabschnitt (32) und einen sich nach vorn erstreckenden Bodenabschnitt (34) aufweisen, aufweist.

14. Gerät nach Anspruch 13, **dadurch gekennzeichnet, dass** der Schwenkarm (84) drehbar an einem Bodenabschnitt (34) gelagert ist.

## Claims

1. Agricultural implement comprising a wheel (52), which can be transferred between a transport and a stowage position and which in a transport position can be fixed to the implement parallel to the transport direction of the implement and is mounted rotatably on an axle (66) and can be brought into contact with the ground, wherein the axle (66) of the wheel (52) can in the transport position be fastened to a swivel arm (84), which is attached to the implement pivotably about an axis extending transversely to the direction of travel during work and which extends from the implement in a first direction and can be transferred into a stowage position in which it extends in a second direction, and wherein a strut (94) coupled to the swivel arm (84) supports the swivel arm (84) both in the transport position and in the stowage position, **characterized in that** the strut (94) is detachably fastened in the transport position to a first point on the implement and in the stowage position to a second point on the implement.

2. Implement according to Claim 1, **characterized in that** the axle (66) of the wheel (52) is detachably fastened to the swivel arm (84).

3. Implement according to Claim 1 or 2, **characterized in that** the axle (66) of the wheel (52) can be fastened in the stowage position to a second point on the implement.

4. Implement according to one of Claims 1 to 3, **characterized by** at least one pin (80) for the detachable tool-less fastening of the wheel (52) to the implement in the transport position and the stowage position.

5. Implement according to Claim 4, **characterized in that** the pin (80) extends through an axle mount (70), which rotatably receives the axle (66), and the axle (66), a rotation of the axle (66) in the axle mount (70) being prevented by the pin (80).

6. Implement according to Claim 3, 4 or 5, **characterized in that** the stowage position of the wheel (52) is a supporting wheel position, in which the wheel (52) supports one end (14, 16) of the implement in a work operation.

7. Implement according to one of the preceding claims, **characterized in that** the wheel (52) in the transport position is located on a front side of the implement, and **in that** a further wheel (50) is disposed on a rear side of the implement, the front side being located, with respect to the working direction of the implement, in front of the rear side.

8. Implement according to one of the preceding claims, **characterized in that** the strut (94) in the stowage position extends upwards on the, with respect to the working direction of the tool, rear side of the implement.

9. Implement according to one of the preceding claims, **characterized in that** the swivel arm (84) is pivotable about an axis running parallel to the transport direction of the implement.

10. Implement according to one of Claims 2 to 9, **characterized in that** on the outer end of the swivel arm (84) a sleeve (72) is disposed, in which the axle mount (70) for the detachable reception of the axle (66) of the wheel (52) is fitted, **in that** the strut (94) is pivotably mounted on the axle mount (70), and **in that** a pin (110) in the transport position secures the strut (94) to the swivel arm (84) and prevents a rotation of the strut (94).

11. Implement according to one of the preceding claims, **characterized in that** the strut (94) can be fastened to the first and second point on the implement by a fastening pin (96) and can be changed over without a tool.

12. Implement according to one of the preceding claims, **characterized in that** it is an agricultural harvesting attachment (10), which is provided with a mounting frame (38) with which it is attachable to a harvesting vehicle, such as a combined harvester.

13. Implement according to one of the preceding claims, **characterized in that** a frame (12) of the implement has an upper beam (18), which extends between opposite ends of the implement on the upper rear part of the implement, a front transverse element (25), which extends on the front edge between the opposite ends of the implement, and a plurality of carrier arms (19-24), which run with the upper beam (18) and the front transverse element (25) and are connected to these and have an upright rear portion (32) and a forward-extending bottom portion (34).

14. Implement according to Claim 13, **characterized in that** the swivel arm (84) is mounted rotatably on a bottom portion (34).

## Revendications

1. Outil agricole comportant une roue (52), qui peut être déplacée entre une position de transport et une position de retenue et qui, dans une position de transport, peut être fixée sur l'outil parallèlement à la direction de transport de l'outil et est montée de manière rotative sur un axe (66) et peut être amenée en contact avec le sol, l'axe (64) de la roue (52) peut être fixé dans la position de transport sur un bras pivotant (84) qui est monté sur l'outil de manière rotative autour d'un axe disposé transversalement à la direction de déplacement pendant le travail et qui s'étend depuis l'outil dans une première direction et qui peut être amené dans une position de retenue, dans laquelle il s'étend dans une deuxième direction, et une entretoise (94), couplée au bras pivotant (84), supportant le bras pivotant (84) tant dans la position de transport que dans la position de retenue, **caractérisé en ce que** l'entretoise (94) est fixée de manière amovible en un premier emplacement de l'outil dans la position de transport et en un deuxième emplacement de l'outil dans la position de retenue.

2. Outil selon la revendication 1, **caractérisé en ce que** l'axe (66) de la roue (52) est fixé de manière amovible sur le bras pivotant (84).

3. Outil selon la revendication 1 ou 2, **caractérisé en ce que** l'axe (66) de la roue (52) peut être fixé, dans la position de retenue, en un deuxième emplacement de l'outil.

4. Outil selon l'une quelconque des revendications 1 à 3, **caractérisé par** au moins une goupille (80) pour la fixation amovible sans outil de la roue (52) sur l'outil agricole dans la position de transport et la position de retenue.

5. Outil selon la revendication 4, **caractérisé en ce que** la goupille (80) passe à travers un logement (70), recevant de manière rotative l'axe (66), et à travers l'axe (66), une rotation de l'axe (66) étant empêchée dans le logement (70) par la goupille (80).

6. Outil selon la revendication 3, 4 ou 5, **caractérisé en ce que** la position de retenue de la roue (52) est une position de roue d'appui, dans laquelle la roue (52) supporte une extrémité (14, 16) de l'outil pendant un processus de travail.

7. Outil selon l'une quelconque des revendications précédentes, **caractérisé en ce que** la roue (52) dans la position de transport se situe sur un côté avant de l'outil, et **en ce qu'**une roue (50) supplémentaire est montée sur un côté arrière de l'outil, le côté avant étant situé devant le côté arrière par rapport à la direction de travail de l'outil.

8. Outil selon l'une quelconque des revendications précédentes, **caractérisé en ce que** l'entretoise (94), dans la position de retenue, s'étend vers le haut sur le côté arrière de l'outil, par référence à la direction de travail de l'outil.

9. Outil selon l'une quelconque des revendications précédentes, **caractérisé en ce que** le bras pivotant (84) peut pivoter autour d'un axe parallèle à la direction de transport de l'outil.

10. Outil selon l'une quelconque des revendications 2 à 9, **caractérisé en ce que** sur l'extrémité extérieure du bras pivotant (84) est agencé un manchon (72), dans lequel est ménagé le logement (70) destiné à recevoir de manière amovible l'axe (66) de la roue (52), **en ce que** l'entretoise (94) est montée de manière à pouvoir pivoter sur le logement (70), et **en ce qu'**une goupille (110) fixe l'entretoise (94) dans la position de transport sur le bras pivotant (84) et empêche une rotation de l'entretoise (94).

11. Outil selon l'une quelconque des revendications précédentes, **caractérisé en ce que** l'entretoise (94) peut être fixée par une goupille de fixation (96) sur le premier et le deuxième emplacement de l'outil et peut être déplacée sans outil.

12. Outil selon l'une quelconque des revendications précédentes, **caractérisé en ce qu'**il s'agit d'un outil frontal de récolte (10) agricole, qui est muni d'un châssis de montage (38), par lequel il peut être monté sur un véhicule de récolte, tel qu'une moissonneuse-batteuse.

13. Outil selon l'une quelconque des revendications précédentes, **caractérisé en ce qu'**un châssis (12) de l'outil comporte un support (18) supérieur qui s'étend entre des extrémités opposées de l'outil sur la partie arrière supérieure de l'outil, un élément transversal avant (25), qui s'étend sur le bord avant entre les extrémités opposées de l'outil, et une pluralité de bras de support (19 à 24) qui s'étendent avec le support (18) supérieur et l'élément transversal (25) avant et qui sont assemblés à ceux-ci et comportent une partie arrière (32) verticale et une partie de fond (34) s'étendant vers l'avant.

14. Outil selon la revendication 13, **caractérisé en ce que** le bras pivotant (84) est monté de manière rotative sur une partie de fond (34).
